# EUROPEAN PATENT SPECIFICATION

(11) **EP 1 418 759 B1**
(45) Date of publication and mention of the grant of the patent: **13.02.2013**
(21) Application number: 03292775.8
(22) Date of filing: 06.11.2003
(51) Int. Cl.: H04N 21/433, H04N 21/418

(54) **Process for distributing audiovisual documents using portable terminals.**
Verfahren zur Verteilung von audiovisuellen Dokumenten mittels eines tragbaren Endgerät.
Procédé de distribution de contenu audivisuel à l'aide de moyens de mémorisations portables.

(30) Priority: 08.11.2002 FR 0214246
(43) Date of publication of application: 12.05.2004
(73) Proprietor: Thomson Licensing, 92130 Issy-les-Moulineaux (FR)
(72) Inventor: Le Pannerer, Yves-Marie, 35700 Rennes (FR); Caranicolas, Aline, 92420 Vaucresson (FR); Letellier, Philippe, 35760 Saint-Gregoire (FR); Houeix, Pierre, 35510 Cesson-Sevigne (FR)
(74) Representative: Thies, Stephan

(56) References cited:
- WO-A-01/20917
- WO-A-01/82625
- US-A- 5 339 239
- WATSON ANDREW W.D.: "UMTS Technology Drivers", PROCEEDINGS OF THE 1998 IEE COLLOQUIUM ON PERSONAL COMMUNICATIONS IN THE 21ST CENTURY, 5 February 1998 (1998-02-05), pages 6/1-6/6, XP006506749, LONDON, UK
- IRVINE JAMES; PESCH DIRK: "Potential of DECT Terminal technology for providing low-cost wireless internet access through infostations", IEE COLLOQUIUM ON UMTS TERMINALS AND SOFTWARE RADIO, 26 April 1999 (1999-04-26), pages 12/1-12/6, XP006500586, LONDON, UK

## Description

The invention relates to a process for distributing audiovisual content with the aid of handheld storage means and the apparatuses implementing the process.

Nowadays, homes are equipped with audiovisual apparatuses such as video recorders (VCR for short) or video disk readers enabling users to be able to reproduce audiovisual works at home or to execute them when these works contain interactivity and hence a software part. Users can rent the media (video cassette or DVD) in shops or distribution facilities located in public places. The distribution facilities have a stock of pre-recorded media. Moreover, they have a screen, a keypad and a payment card reader, that are placed in the front face of the facility and are thus accessible to the public. The consumer who wishes to rent a cassette or a DVD, containing for example a film, selects the desired title by means of the screen and the keypad and pays by way of the card. The facility then delivers this cassette or this DVD to him, the user subsequently having to return it within a time compatible with the duration of rental granted to him. The user rents the medium for a determined duration and returns it to the shop or to the facility at the end of this period.

Such a distribution system comprises several drawbacks. On the one hand, the user is obliged to travel twice, once to fetch the medium, and once again to bring it back. Next, the places of distribution possess a limited number of media, so it sometimes happens that the user who wishes to fetch a particular work has a wasted journey since the medium is no longer in stock. Such a system therefore requires the movement of teams for maintaining a stock that changes with the latest works taken out and preferably corresponds to the tastes of the users. If it is a distribution facility that rents out the medium, the latter is extracted from a storage chamber and conveyed from the facility by

Another means of viewing an audiovisual work at home is to order it via a broadcasting network. In this case, the work is downloaded into the domestic audiovisual system for a certain price. Generally downloading is made secure and payment is effected with the aid of a chip card containing the user's rights. This means, called "video on demand" (VOD for short) avoids the need for the user to travel, and does not require a physical medium for the transport of the work.

However, this system requires a high-performance broadcasting network with means making it possible to transfer audiovisual contents as rapidly as possible. Hence, the bandwidth of such a network is considerable, thereby requiring a large infrastructure, and hence a sizeable cost. If a large number of users use this system to download a particular audiovisual work each, the means of communication very quickly becomes clogged and the user must wait for a certain time before obtaining what he has requested.

Document US 5 339 239 - MANABE describes the downloading of digital data such as newspaper articles or advertisements, with the aid of a cartridge equipped with integrated circuits. The user enters his cartridge into an access terminal, downloads the data and then transports his cartridge to a reader so as to view the recorded data. The user interface is at the level of the access terminal which is therefore monopolized by a user. The downloading procedure is not fast and does not allow real-time communication with several users.

"The document WO 01 82625 - World Theatre relates to a video and music distribution systems. Users send request for downloading document in exchange for payment. The broadcaster sends by radio audiovisual documents to home networks. The document is stored in a memory, it can be reproduced on a TV screen by commands introduced by a hand held remote.

The document WO 01 20917 - VIDEOSDOTCOM discloses a video distribution server for use in a huge communication network. A user requests information situated in a distant database. The bidirectional communication between the user and the database goes through several controllers.

Neither do documents WO 01 82625 - World Theatre and WO 01 20917 - VIDEOSDOTCOM offer several users the possibility of conversing at the same time with a content provider so as to download audiovisual documents into a portable apparatus. The present invention offers a new means of distributing audiovisual documents that does not have the drawbacks of the prior art.

For this purpose, the invention relates to a process for distributing audiovisual documents transmitted from a broadcasting office; characterized in that it comprises the following steps
- entry of a download command at the level of a portable terminal, and downloading by radio of the document from a fixed device to the memory of the portable terminal,
- connection of the portable terminal to a domestic installation so as to reproduce the document within said domestic installation.

In this way, the present invention allows completely secure and reliable transportation of an audiovisual document purchased from a straightforward point of sale so as to be reproduced by a domestic installation. The user launches the download command from his portable terminal, the terminal and the fixed device communicate by radio for the downloading.

According to an improvement, the portable terminal receives a document download signal, the user selects this document thereby triggering its receipt and its storage in the portable terminal when this document is transmitted by the fixed device. In this way, the user commands are particularly simple and communication between the apparatuses is fast.

According to another improvement, the download is conditioned by the proper running of the payment of a price associated with the selected document. This price is stored in the fixed device. According to another improvement, the payment is made as a function of the number of reproductions of the document when the portable terminal is connected to the user's domestic installation.

According to another improvement, the fixed device meters the number of downloads. In this way, it is possible to deduce there from statistics regarding the use of the fixed device and regarding the public's interest in each document stored. According to an improvement, a document is deleted from the fixed device when the download number is reached. The storing of this document in the fixed device is then considered to be profitable, so this document may be replaced by another. According to a variant, the document is deleted when the number of downloads per unit time is less than a determined value.

According to another improvement, the downloading is conditioned by the proper running of the payment of a price associated with the selected document. This price is stored in the fixed device.

According to another improvement, the document is stored enciphered in the fixed device. Prior to the download, within the fixed device, the document is deciphered then enciphered with the aid of a key associated with the terminal intended to receive the document. Thus the transfers between the broadcasting office and the fixed device on the one hand, and the downloads between the fixed device and the portable terminals are made secure, and the document cannot be picked up unencoded by a fraudster.

According to another improvement, the user enters, at the level of his portable terminal, an identifier of the document that he wishes to download. This identifier is subsequently sent to the fixed device so as to launch the downloading of the corresponding document According to another improvement, the terminal displays the list of documents available within the fixed device, in this way by virtue of his portable terminal the user can choose the documents that he wants to download.

The present invention also relates to a portable terminal comprising a central unit, a means of storing at least one audiovisual document, a means of communication by connection with another apparatus or a network, characterized in that it furthermore comprises a means of radio communication for the receiving of at least one document download signal, a means of entering a command making it possible to activate the reception of said document with the aid of the radio communication means, the storage means storing the document received, the reproduction of at least one stored document being performed with the aid of the means of communication via a connection.

In this way, the terminal receives via the wireless link a document and, once connected to the domestic installation, can reproduce it via a connector on a reproduction apparatus (for example a television screen) or an apparatus for utilizing the document (for example, an interactive games or a decoder). This means of transport ensures great reliability and great flexibility for the reproduction or the execution of the document.

According to an improvement, the portable terminal has a means of payment in respect of a sum corresponding to the document to be downloaded. According to another improvement, the terminal has a counter for metering the reproductions of the documents recorded in the memory of the terminal. The number of programs is subsequently dispatched to an office that determines the price to be paid as a function of the number of reproductions.

According to an improvement, the portable terminal comprises a deciphering algorithm associated with a deciphering key specific to it. The document recorded in memory is deciphered at the time of reproduction.

According to an improvement, the portable terminal receives a list of identifiers of documents, the user can then enter on a keypad a command to select at least one of the identifiers. The terminal then dispatches a command to download the selected document accompanied by an identifier of the terminal, and activates its means of reception. When the document has been received, it is stored forthwith in the terminal.

According to an improvement, the portable terminal comprises a screen and a keypad allowing a user to converse with a download device. The user can thus from his terminal choose the document that he wishes to download.

According to another improvement, the portable terminal comprises a chip card reader allowing a payment to be validated and/or the downloading of the document to be made secure.

The present invention also relates to a fixed device for downloading audiovisual documents, comprising a central unit, a means of storing at least one audiovisual document; characterized in that it comprises a means of communication by radio receiving a signal for downloading from an apparatus situated in immediate proximity and sending in response the document specified in the download signal.

In this way, the present invention allows simple and fast downloading of a document stored in a fixed facility.

According to an improvement, the facility transmits an identifier list for the documents stored in its memory. It then receives a download request comprising an identifier of at least one document and an identifier of a terminal. Following this, the facility downloads the selected document(s). In this way the user can choose the programs that he wants to take home so as to reproduce them or execute them without any disturbance.

According to an improvement, the facility transmits the document in enciphered form. The enciphering is performed with the aid of a data item specific to the recipient apparatus. In this way, a fraudster picking up the program would be incapable of deciphering the data. According to another improvement, the facility has a means of payment that conditions the downloading of the document.

According to an improvement, the facility has a counter of the downloads associated with at least one document. As soon as this counter reaches a determined value, the storing of this document is regarded as having been profitable, it is then erased. A variant consists in the document being deleted when the number of downloads per unit time is less than a determined value, there thus being not much demand for the document and so it is unnecessary to keep it in memory for longer. In this way, the stock of documents available within the facilities is constantly renewed.

The present invention will now appear with further details within the context of the description which follows of exemplary embodiments given by way of illustration while referring to the appended figures in which:
- figure 1 is a diagram showing a user manipulating the various devices according to an exemplary embodiment of the invention,
- figure 2 is a block diagram of a portable object for storing audiovisual works according to an exemplary embodiment of the invention,
- figure 3 is a block diagram of a distribution facility for the downloading of audiovisual works according to an exemplary embodiment of the invention,
- figure 4 illustrates the main steps for the transferring of an audiovisual document,
- figure 5 illustrates the steps performed during the downloading of documents from a facility into a portable terminal,
- figure 6 illustrates the various conversations between a facility and a portable object during the downloading of a work according to an exemplary embodiment of the invention.

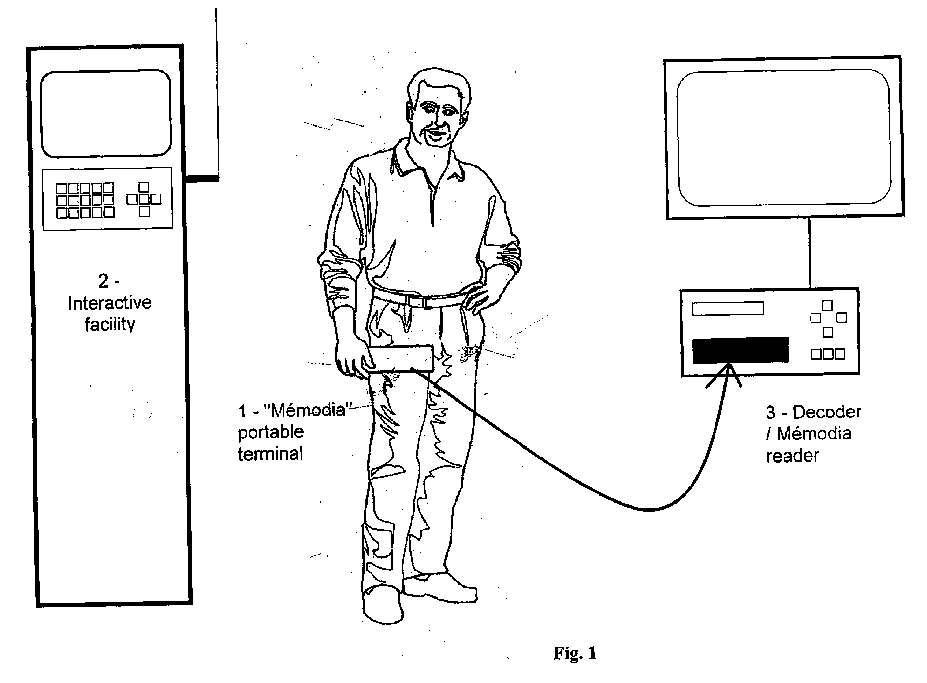

Figure 1 presents the various elements of a preferred exemplary embodiment of the invention. A user approaches a fixed interactive downloading facility 2 and activates his portable terminal 1 called a "Memodia". Following activation, a conversation by radio link is instigated between the interactive facility 2 and the portable terminal 1, a screen then proposes the list of documents available from this facility and the user chooses one or more documents while indicating a means of payment. A variant consists in the list being displayed on a screen placed on the portable terminal 1. Initially, the fixed facility 2 verifies the user's rights for downloading the selected documents, then, if these rights are granted, the downloading of the selected documents is performed into the "Memodia" of the user with the aid of the high throughput radio link. An improvement consists in the fixed facility 2 storing the characteristics of each download, so as to transfer them subsequently to a broadcasting office (not represented) for statistical purposes (to evaluate the profitability of each facility for example).

Next, the user goes home and connects his Mémodia 1 to his domestic installation 3. The audiovisual documents selected can then be reproduced on the user's installation. Thus, the user has been able to search for a document at a place of sale and transport it to his home so as to reproduce it at his leisure.

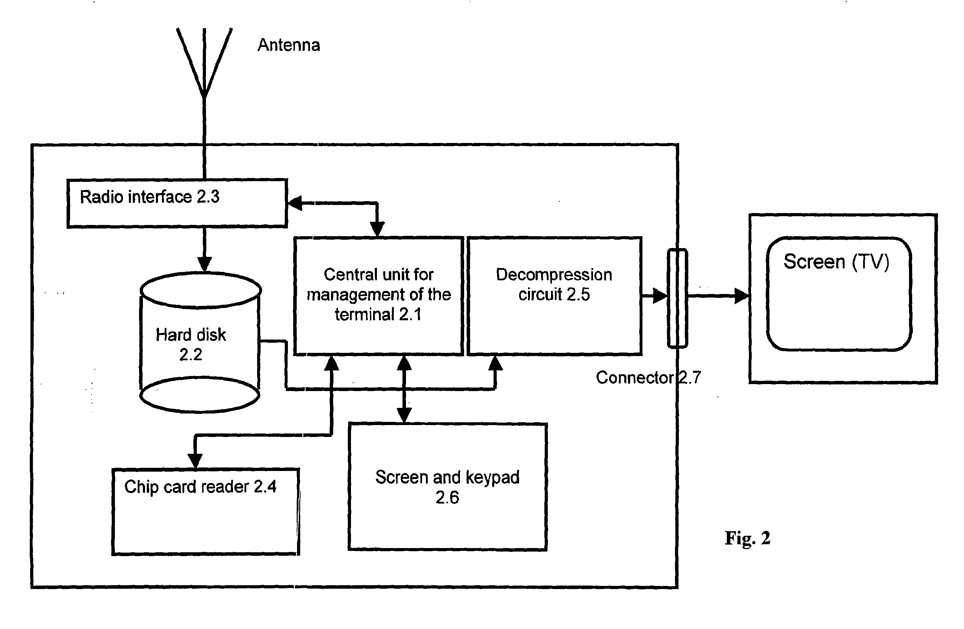

Figure 2 presents a block diagram of a "Mémodia" portable terminal 1 allowing the downloading of audiovisual documents from a fixed facility 2 and the reproduction of the documents at the level of a domestic installation 3.

According to a preferred exemplary embodiment of the invention, the portable terminal 1 comprises the following elements:
- a central unit 2.1 for the management of the terminal, this central unit is linked to a program memory (ROM - not represented) containing a management program and a work memory (RAM - not represented),
- a storage unit 2.2, preferably a hard disk of sufficient capacity to store one or more titles (documents).
- a radio transmitter/receiver 2.3 of high throughput and of sufficient range to establish a digital linkup with a facility situated a few meters away. This transmitter/receiver is furnished with an antenna. The current technology (for example that defined by the IEEE 802.11 and Hiperlan2 or IEEE 802.15 standards) is particularly suitable for this application.
- a chip card reader 2.4 making it possible to validate the transactions and to fulfill the security functions related to the protection of the contents. The reader receives in particular the Mémodia application card that enables the transfers to be made secure, and to a certain extent, payments to be made,
- a circuit 2.5 for decompressing the audio/video information (in the case where this information is stored on the disk in compressed form).
- a user interface 2.6 consisting for example of a screen and of a keypad or any other device allowing the user to converse with his portable terminal,
- a connector 2.7 making it possible to plug the apparatus into an installation allowing the reproduction of the audiovisual work stored in the hard disk, for example: a domestic network, a digital decoder, an individual computer or a viewing terminal (for example a television). This connector can be dispensed with should the terminal itself be equipped with a radio transmitter/receiver for communication. The communication protocol using the medium of this connector is for example IEEE 1394.

The Mémodia 1 converses by radio with the interactive facility during the downloading of audiovisual documents, and communicates via the connector with the domestic installation so as to transfer the documents recorded into the domestic installation in order to reproduce them on a screen. In order to limit to the maximum the cost of a Mémodia, the user interface may consist of merely a button and an indicator light. In this case, the displaying of the interface data is performed mainly at the level of the facility and at the level of the domestic installation.

In a preferential but not limiting manner, the storing in the hard disk is performed in compressed form (for example by using the MPEG-2 or MPEG-4 standard in the case of a film), and in a form enciphered with the aid of an enciphering key specific to the user, in this way only the user having his chip card containing the corresponding deciphering key can reproduce or execute the recorded document.

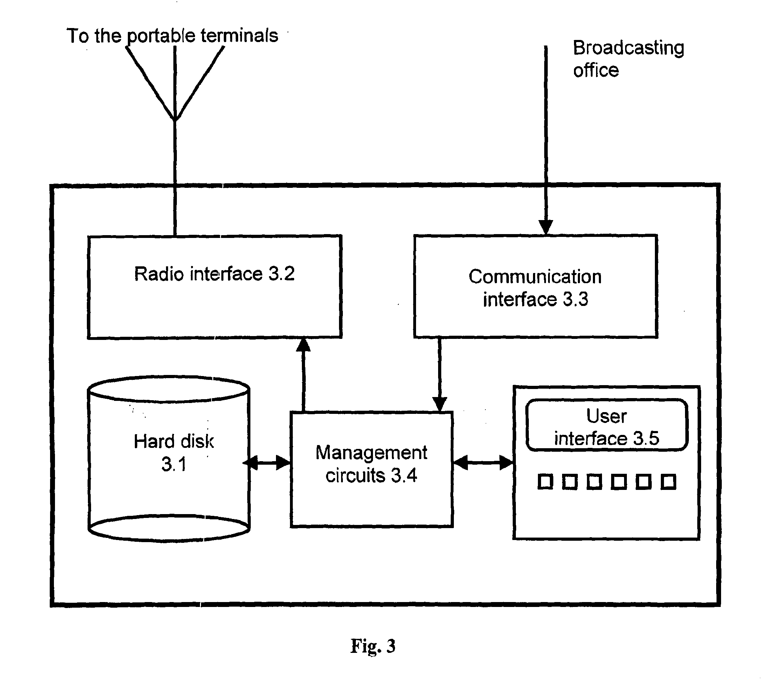

Figure 3 shows the main elements of the interactive facility. According to a preferred exemplary embodiment, the facility comprises the following elements:
- one (or more) hard disk(s) 3.1 of large capacity making it possible to store several audiovisual documents (possibly in compressed form, for example in MPEG-2 or MPEG-4 and enciphered with the aid of a key specific to the facility),
- a radio transmitter/receiver 3.2 with high throughput of a sufficient range to establish a digital linkup with a portable terminal situated a few meters away. This transmitter/receiver is furnished with an antenna. The current technology (for example that defined by the IEEE 802.11 and Hiperlan2 or IEEE 802.15 standards) is particularly suitable for this application,
- a means of communication 3.3 with a broadcasting office allowing providers of audiovisual works to transfer them into the facility. This means of communication can be a telephone line or a satellite link, it does not need to be of very high throughput.
- possibly a viewing screen or any other means of displaying the titles of the documents stored in the facility and a keypad 3.5,
- possibly a means of payment: bank card reader and application for managing the card so as to carry out a payment, receiver of coins or bank notes, etc. (not represented)
- the facility's management circuits 3.4 (enciphering and deciphering of the documents, security of the transactions, maintenance, etc.).

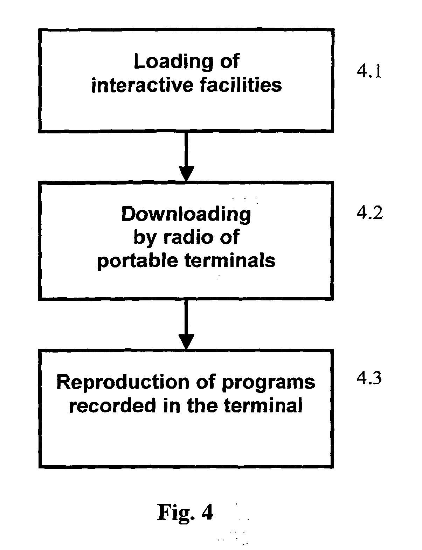

After having described the main elements of a system making it possible to implement the invention, we shall now detail the manner in which they cooperate. Figure 4 shows the main operations making it possible to convey a document from a broadcasting office to the domestic installation of a user with a view to its reproduction. These operations are:
- Loading of the interactive facilities,
- Downloading of the portable terminals,
- Reproduction of the documents in the domestic installation.

Each of these operations will now be explained in detail.

The first operation (step 4.1) consists in loading audiovisual documents into the interactive facilities. To do this, the facilities are linked to a broadcasting office by means of a broadcasting network. This broadcasting network may be unidirectional or bidirectional. In the latter case, the office can ascertain the use of each facility and deduce there from, for example, their profitability. In a favoured manner, the loading of the facilities is performed with the aid of the telephone network. However, this setup does not in any way exclude the use of other networks known per se such as ADSL, a private cable network or a satellite communication.

Transfer is made secure. The office has a security module enciphering the documents with the aid of a key corresponding to the one contained in the facility. The document is stored in its enciphered form so that any fraudster who might recover the digital data of the document cannot use them. Next, during downloading, the security module present in the facility deciphers the document with the key of the facility and enciphers the document forthwith with the enciphering key of the portable terminal for which the document is intended.

The loading is performed in the hard disk of the interactive facility from the server centre and under the control of a maintenance centre (that are specific to a collection of facilities, for example those that are operated by one and the same company), that are not described in this text. The documents may possibly be transmitted in compressed form (MPEG2 or MPEG4 for example). The loading does not require a very high speed of transmission and may be performed at times at which telephone traffic is billed at an advantageous tariff. A variant consists in the loading of documents being performed locally. An operator of the broadcaster having a portable loading terminal connects up to the facility by virtue of a wire link. The portable terminal then sends a certain number of audiovisual documents into the facility and instructs the erasure of documents deemed to be unprofitable. This variant allows a high level of security since the communication cannot be picked up.

On completion of the loading operation, the facility possesses in stock, in its hard disks, a certain number of documents that it is able to distribute to its customers. Management data are associated with each downloadable document, including: the identifier of the document (the title, the trailer, the poster of the document, etc.), the price of a download, a download counter, etc. The download counter is created and zeroed following reception in the facility, this counter makes it possible to formulate statistics.

In a favoured manner, the broadcasting office manages the content of each facility, and regularly receives from each of them, usage reports. Thus, the office determines whether there is no longer sufficient demand from users for a document, and in this case, it should be erased so as to be replaced by another. The objective is to occupy the entire memory of the facilities with documents liable to be of interest to the maximum of users. The broadcasting office can also determine the profitability of each facility and thus decide that certain facilities are not profitable and should be sited elsewhere. If the installation and the maintenance of the facilities are carried out by a different company from the audiovisual content broadcaster, this company can be remunerated as a function of the number of downloads performed. In this way, this company benefits from placing the facilities in the most profitable locations and in maintaining them in good running order.

A variant consists in granting the facilities considerable autonomy, so they can individually decide whether this or that broadcast content should or should not be downloaded. This decision may be taken when audiovisual content has not been downloaded for a certain time and can therefore be erased so as to be replaced with a more recent document, which is therefore more likely to be of interest to people. A facility which erases a document can then load up a new one from a broadcasting network. This variant avoids centralized management of the contents of facilities.

The second operation (step 4.2) consists of the phase of purchasing or of renting the document by the customer and its downloading. To do this, the customer possesses a Mémodia terminal and stands in proximity to the facility (in any event within radio link range). Next, he activates his terminal which then dispatches a radio signal so as to get in touch with a facility. If the facility situated in proximity does not respond, a display means indicates same on the Mémodia. An improvement consists in the Mémodia not receiving the signal of start of communication with the facility but detecting radio signals indicating that a communication has already been established between the facility and another Mémodia. The Mémodia then indicates to its user that the facility is occupied, and that the communication will be established subsequently. When the first user ceases communication, the display of the Mémodia indicates to the second user that the communication is now established.

According to the present exemplary embodiment, the downloading of audiovisual documents into a Mémodia is performed in five steps:
- Presentation of the downloadable documents
- Selection of a document by the user
- Verification of the rights for downloading the document
- Downloading of the document
- Updating of the download.

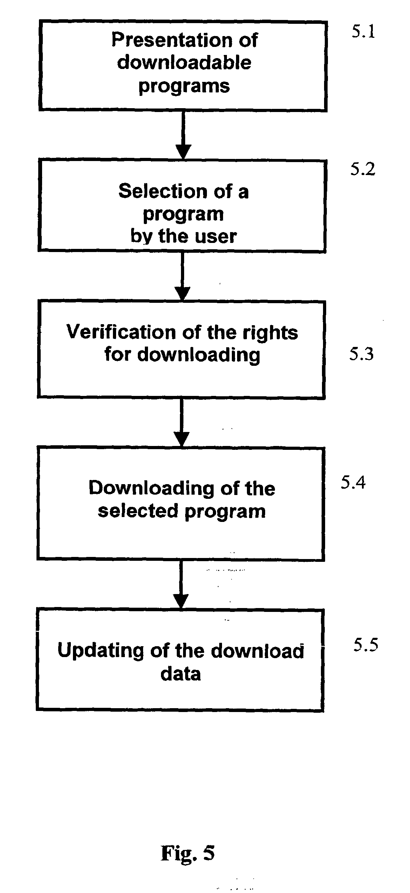

Each of the steps, illustrated by figure 5, will now be explained in detail.

Let us assume that the communication is established between the facility and the terminal. Firstly (step 5.1), the facility proposes recorded documents and the user can choose the one that is of interest to him. If the facility has a means of display, it displays the content of its memory in the form of a list of identifiers of documents, the titles, for example.

Secondly (step 5.2), the user then enters the title or the index number associated with this title on the keypad of his Mémodia which sends the facility a request to download the identified document. If the facility does not have display means, it sends the terminal the list displayed on the screen of the Mémodia. The user makes his choice and decides to download a document that he selects with the aid of the screen and of the keypad of his Mémodia. The terminal then dispatches a download request signal, indicating the identifier of the selected document and the identifier of the terminal.

Thirdly (step 5.3), the rights for downloading into this Mémodia are verified. Several variants are possible:
- The downloading of this document is free of charge. In this case, it is done immediately.
- The user has a credit in the Mémodia. The facility then indicates the amount to be paid for downloading, the credit is then debited this amount and the download is performed. If the credit is not sufficient, the display of the Mémodia indicates same to its user.
- The payment is performed by post-billing. In this case, the facility keeps in memory the indication of the download into the identified Mémodia. Next, during a communication with the broadcasting office, the facility sends the characteristics of the download, the documents broadcaster then bills the amount of the download to the bank account of the user of this Mémodia.
- The facility has a means of payment. In this case, it displays the amount of the download, the title of the document and the identifier of the Mémodia. The user then enters his bank card or cash into the means of payment of the facility. Following this, the download is performed.
- The payment is performed by bank card at the level of the Mémodia. The display indicates the amount of the transaction. The user enters his bank card into the chip card reader of his terminal, types his bearer code into the keypad and validates the payment. The Mémodia dispatches the characteristics of the electronic payment to the facility which verifies them, the facility being provided with the trading bank application that makes it possible to verify the bank transaction certificates. Once the payment by card has been validated, the download is performed.
- In its memory the Mémodia possesses a voucher for downloading an identified document. The terminal transmits this voucher to the facility which verifies its validity and returns its agreement. The Mémodia erases the voucher from its memory and prepares for downloading. For example, the user has just seen a pay-to-view show, and the price comprises the downloading of the audiovisual or audio recording of the show seen by the user.
- The user possesses a local account at the facility which is closest to his home. The facility debits the user's account with the amount of the download and sends the new credit of the account to the Mémodia which displays it and records it. The user can then at any moment consult his credit and possibly decide to replenish his account.

Fourthly (step 5.4), the downloading of the document is performed from the facility to the Mémodia. This transfer is carried out by virtue of a radio link whose transmission technology has been eluded to previously, allied with the compression of data, thereby permitting the loading of a film in a few tens of seconds, for example. The transfer is made secure so as to be performed only in the identified Mémodia. The security consists in the facility having a security module making it possible to retrieve the key of each Mémodia from its identifier, then to encipher the audiovisual document with the aid of this key before transfer. The Mémodia stores the downloaded document in enciphered form, this comprising several advantages. On the one hand, should a fraudster have access to the hard disk of a Mémodia, he cannot recover the digital data from the document uuencoded. On the other hand, deciphering takes time, and it is preferable not to do it during downloading, thereby lengthening the communication time, but rather during reproduction of the document at the user's home. An improvement consists in the Mémodia continuously displaying the state of the download and indicating the remaining time to the user.

Finally in a fifth step (step 5.5), the facility and the Mémodia are updated. At the level of the Mémodia, the downloaded document is added to the list of documents available from this Mémodia, the credit of a possible user account is updated, the download voucher is erased. Mémodia usage data recorded in the Mémodia card are transferred to the facility. At the level of the facility, the download counter is incremented by one unit. The Mémodia usage data are processed and possibly transferred to the broadcasting office. These data comprise for example the number of reproductions of a document that have been performed at the user's home, this making it possible to define the price to be paid by the user as a function of the reproductions of documents recorded in the Mémodia.

On completion of this fifth step, the radio link is released, for another transaction with the same Mémodia, or for another Mémodia belonging to another user.

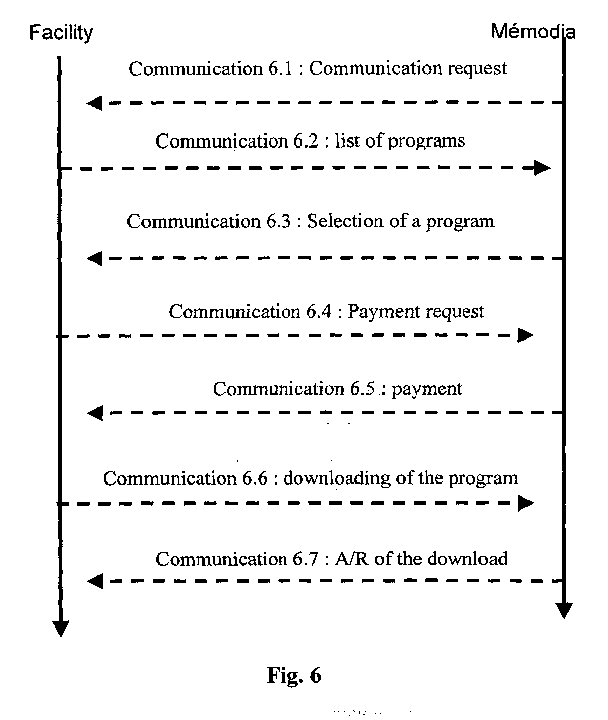

Figure 6 presents the main exchanges between a facility and a portable terminal. During a first communication, the portable terminal is turned on and dispatches a request for communication to a facility with a view to conversing with it (communication 6.1). If no facility responds, the terminal informs the user of this, if the latter knows that there is a facility in proximity, he has to approach closer to it. Let us assume that there is a facility in proximity and that it is available, it launches the communication and sends the list of documents that it has, indicating the price for each document (communication 6.1). The terminal displays the list and the price of each document (if it possesses a display), the user can then press a button to select a document of the list, the terminal then transmits a signal for selecting a document comprising the identifier of the selected document and of the terminal (communication 6.3). The facility verifies the data received and sends back a payment request signal (communication 6.4). The terminal transmits data allowing payment (communication 6.5), these data depend on the type of payment chosen by the user. The facility verifies the data received, validates the payment and launches the downloading of the document (communication 6.6). Once the last packets of data have been transmitted, the terminal verifies correct reception. If the transmission did not run properly, it asks the facility to download again. When the download has run correctly, the terminal informs the facility thereof and thus closes the communication (communication 6.7). Following this, the terminal and the facility update their data.

A variant embodiment relating to downloading consists in being able to send the same document to several Mémodia at once. This improvement is particularly beneficial when the facility proposes the audiovisual content of a show that has just run in immediate proximity to the facility. According to this variant embodiment, the facility transmits a signal identifying the audiovisual program that it possesses in memory. The user sees that his Mémodia is receiving a download signal and decides to validate it by pressing a button. For this type of transfer, the audiovisual document is divided into digital data packets and is broadcast by the facility in a loop without checking the reception of each packet. After having had the download rights validated, the Mémodia records the packets on the fly. Once all the packets have been correctly received, the document is reconstructed in the memory. This improvement allows a sharp increase in the number of downloads from a facility. Another advantage of this variant embodiment is of not needing to furnish the Mémodia with a bidirectional radio link, a simple radio receiver is sufficient. The payment can then be performed when the terminal is connected to the domestic network, the payment data are then be transmitted by telephone.

The purchasing of the audiovisual document may be subject to rights of use. The Mémodia receives and records the document in enciphered form, the reproduction must be performed with the aid of a security module (typically the user's chip card) containing the user's deciphering key. During each reproduction, the user must insert his application card into the Mémodia so as to be able to decipher the document and dispatch it to a screen in the form of video signals. The application card meters the number of times that it is called upon in respect of this operation and thus it knows the number of reproductions of the document. This data item is then sent to the broadcasting office, which can thus take payment from the user as a function of the number of reproductions. The data item is sent either when the terminal is connected to the domestic network, the data item can then be sent by telephone, or during a communication with a facility during a download, this send being performed during step 5.5.

The third operation (step 4.3) consists in reproducing the document within a domestic installation 3. To do this, the user connects his Mémodia at home to his domestic network and transfers via the connector 2.7 the audiovisual document so as to reproduce it on a television screen and/or on his audio equipment. The portable terminal then plays the same role as a video recorder with additionally the advantages related to the digital storage of documents. The user interface of the Mémodia allows the reproduction of the recorded documents. The screen displays the content of the various documents stored and the user selects with the keypad the one which he wishes to reproduce on his domestic installation.

According to a variant, once the connection has been performed, the user presses a button of the Mémodia which triggers the taking in hand thereof by the domestic installation, a PC for example. The domestic installation prompts the user with the aid of a menu to reproduce the stored documents. The user selects a document which is read from the memory of the portable terminal, deciphered with the aid of the user's specific key and reproduced on a screen and/or an audio installation.

According to an improvement already mentioned, the portable terminal transmits the video signals directly to a screen and meters the number of reproductions of the recorded documents. The Mémodia card checks the reproduction rights and meters the number of reproductions.

It should be noted that the invention is not limited to audiovisual documents but relates also to interactive applications such as computer programs, or audio only documents. Let us take the case where the interactive facilities are placed in front of concert halls, the benefit is to be able to download the audio content of the last concert. In this way, people leaving the concert that they particularly liked, can purchase the audio content of this concert and take it home with them and store it in their audio reproduction system. This type of facility retains the content of the last representation, a new concert updates the content of the facility. As an audio only content occupies much less memory room than an audiovisual content, downloading is very fast, thereby making it possible to satisfy a large number of users.

## Claims

1. A process for distributing audiovisual documents transmitted from a broadcasting office; **characterized in that** it comprises the following steps:
- selection of a document by entering a command in a fixed device (2) at a point of sale, and downloading by radio of the selected document from the fixed device (2) to the memory of a portable terminal (1),
- connection of the portable terminal (1) to a domestic installation (3) so as to reproduce the document within said domestic installation (3).

2. The process for distributing documents as claimed in claim 1; **characterized in that** the downloading of the document into the portable terminal comprises the following steps:
- transmission by the fixed device of a signal proposing the downloading of at least one document,
- validation of the downloading by introducing a command on the portable terminal,
- transmission by the fixed device and reception at the level of the portable terminal of at least one document,
- storage of the document selected at the level of the portable terminal.

3. The process for distributing documents as claimed in claim 2; **characterized in that** the transfer is conditioned by the proper running of a step of payment of a price associated with the document selected and stored in the fixed device.

4. The process for distributing documents as claimed in claim 2, **characterized in that** it comprises a step of metering the number of reproductions at the level of the domestic installation, and a step of payment of a sum calculated as a function of this number.

5. The process for distributing documents as claimed in any one of claims 1 to 4; **characterized in that** it comprises a step of metering the documents downloaded by the fixed device (2).

6. The process for distributing documents as claimed in claim 5; **characterized In that** it comprises a step of deletion of a document within the fixed device (2), said step of deletion being triggered when the downloading counter associated with this document has reached a certain value.

7. The process for distributing documents as claimed in claim 5; **characterized in that** it comprises a step of deletion of a document within the fixed device (2), said step of deletion being triggered when the number of downloads per unit time is less than a determined value.

8. The process for distributing documents as claimed in any one of claims 1 to 7; **characterized in that** the document is stored enciphered in the fixed device (2), and **in that** it comprises, prior to the downloading of a document into a terminal (1), a step of deciphering this document and a step of enciphering the document with the aid of a key associated with the terminal intended to receive the document.

9. A system for providing audiovisual documents, comprising
a fixed device (2) at a point of sale providing audiovisual documents transmitted from a broadcasting office, a document being selected by entering a command in the fixed device (2);
a portable terminal (1) including a memory for downloading by radio the selected document from the fixed device (2) to the memory of the portable terminal (1);
and a domestic installation (3) for being connected to the portable terminal (1) so as to reproduce the document within said domestic installation (3).

10. The system according to claim 9, **characterized in that** the portable terminal (1) comprising a central unit, a means of storing at least one audiovisual document, a means of communication by connection with another apparatus or a network, a means of communication by radio for the receiving of a download signal of a document, a means of entering a command of validating the downloading of said document with the aid of the radio communication means, the storage means storing the document received, the reproduction of at least one stored document being performed with the aid of the means of communication via a connection.

11. The system according to claim 10, **characterized in that** the portable terminal (1) comprises a means of making a payment corresponding to a sum associated with the identifier of the document.

12. The system according to one of claims 10 or 11, **characterized in that** the portable terminal (1) comprises a means of metering the reproductions of at least one document recorded in the storage means, and a means of transmitting the number associated with the metering means.

13. The system according to one of claims 10 to 12, **characterized in that** the portable terminal (1) comprises a means of deciphering associated with a deciphering key specific to the terminal, said deciphering means being activated upon the reproduction of the document recorded in the storage means.

14. The system according to one of claims 10 to 13, **characterized in that** the portable terminal (1) comprises a means of displaying the list of identifiers.

15. The system according to one of claims 10 to 14, **characterized in that** the portable terminal (1) comprises a chip card reader allowing a payment to be validated.

16. The system according to one of claims 10 to 15, **characterized in that** the portable terminal (1) comprises a chip card reader allowing the downloading of the document.

17. The system according to one of claims 10 to 16, **characterized in that** the fixed device (2) for downloading audiovisual documents comprising a central unit (2.1), a means of storing (2.2) at least one audiovisual document, a means of displaying of a list of documents, a means of selecting a document in the list, a means of communication by radio sending a signal for downloading the selected document to an apparatus (1) situated under the range of the means of communication and receiving in response a validation signal for downloading the document specified in the download signal.

18. The system according to one of claims 10 to 17, **characterized in that** the fixed device (2) for downloading audiovisual documents comprising a means of enciphering the document with the aid of an enciphering key associated with the identifier of the terminal for transmitting the document in enciphered form.

19. The system according to one of claims 10 to 18, **characterized in that** the transfer of the document is conditioned by a payment.

20. The system according to one of claims 10 to 19, **characterized in that** the fixed device (2) for downloading audiovisual documents comprises a means of metering the downloads associated with at least one document, and a means of deletion of this document from the memory, said means being activated when the value of the means of metering of downloading associated with this document has reached a predetermined value.

21. The system according to one of claims 10 to 20, **characterized in that** the fixed device (2) for downloading audiovisual documents comprises a means of metering the downloads associated with at least one document, and a means of deletion of this document from the memory, said means being activated when the number of downloads per unit time is less than a determined value.

22. A portable terminal (1) for use in a system according to one of claims 9-21.

23. A fixed device (2) for use in a system according to one of claims 9-21.

## Patentansprüche

1. Verfahren zum Verteilen audiovisueller Dokumente, die von einer Rundfunkstelle gesendet werden, **dadurch gekennzeichnet, dass** das Verfahren die folgenden Schritte umfasst:
- Auswahl eines Dokuments durch Eingeben eines Befehls in eine stationäre Vorrichtung (2) bei einem Verkaufsplatz und Herunterladen des ausgewählten Dokuments von der stationären Vorrichtung (2) in den Speicher eines tragbaren Endgeräts (1) per Funk,
- Verbindung des tragbaren Endgeräts (1) mit einer Hausinstallation (3), um das Dokument innerhalb der Hausinstallation (3) wiederzugeben.

2. Verfahren zum Verteilen von Dokumenten nach Anspruch 1; **dadurch gekennzeichnet, dass** das Herunterladen des Dokuments in das tragbare Endgerät die folgenden Schritte umfasst:
- Sendung eines Signals, das das Herunterladen mindestens eines Dokuments vorschlägt, durch die stationäre Vorrichtung,
- Überprüfung des Herunterladens durch Eingeben eines Befehls in das tragbare Endgerät,
- Sendung mindestens eines Dokuments durch die stationäre Vorrichtung und sein Empfang auf der Ebene des tragbaren Endgeräts,
- Speicherung des auf der Ebene des tragbaren Endgeräts ausgewählten Dokuments.

3. Verfahren zum Verteilen von Dokumenten nach Anspruch 2; **dadurch gekennzeichnet, dass** die Übertragung unter der Bedingung erfolgt, dass ein Schritt der Zahlung eines dem ausgewählten und in der stationären Vorrichtung gespeicherten Dokument zugeordneten Preises richtig ausgeführt wird.

4. Verfahren zum Verteilen von Dokumenten nach Anspruch 2; **dadurch gekennzeichnet, dass** es einen Schritt des Zuteilens der Anzahl von Wiedergaben auf der Ebene der Hausinstallation (3) und einen Schritt der Zahlung einer in Abhängigkeit von dieser Anzahl berechneten Summe umfasst.

5. Verfahren zum Verteilen von Dokumenten nach einem der Ansprüche 1 bis 4; **dadurch gekennzeichnet, dass** es einen Schritt des Zuteilens der durch die stationäre Vorrichtung (2) heruntergeladenen Dokumente umfasst.

6. Verfahren zum Verteilen von Dokumenten nach Anspruch 5; **dadurch gekennzeichnet, dass** es einen Schritt der Löschung eines Dokuments innerhalb der stationären Vorrichtung (2) umfasst, wobei der Schritt der Löschung ausgelöst wird, wenn der diesem Dokument zugeordnete Downloadzähler einen bestimmten Wert erreicht hat.

7. Verfahren zum Verteilen von Dokumenten nach Anspruch 5; **dadurch gekennzeichnet, dass** es einen Schritt der Löschung eines Dokuments innerhalb der stationären Vorrichtung (2) umfasst, wobei der Schritt der Löschung ausgelöst wird, wenn die Anzahl der Downloads pro Zeiteinheit kleiner als ein bestimmter Wert ist.

8. Verfahren zum Verteilen von Dokumenten nach einem der Ansprüche 1 bis 7; **dadurch gekennzeichnet, dass** das Dokument in der stationären Vorrichtung (2) verschlüsselt gespeichert wird und dass das Verfahren vor dem Herunterladen eines Dokuments in ein Endgerät (1) einen Schritt des Entschlüsselns dieses Dokuments und einen Schritt des Verschlüsselns des Dokuments mit Hilfe eines dem Endgerät, das das Dokument zu empfangen beabsichtigt, zugeordneten Schlüssels umfasst.

9. System zum Liefern audiovisueller Dokumente, wobei das System umfasst:
eine stationäre Vorrichtung (2) bei einem Verkaufsplatz, die audiovisuelle Dokumente liefert, die von einer Rundfunkstelle gesendet werden, wobei ein Dokument durch Eingeben eines Befehls in die stationäre Vorrichtung (2) ausgewählt wird;
ein tragbares Endgerät (1), das einen Speicher zum Herunterladen des ausgewählten Dokuments von der stationären Vorrichtung (2) in den Speicher des tragbaren Endgeräts (1) per Funk enthält;
und eine Hausinstallation (3), damit diese mit dem tragbaren Endgerät (1) verbunden ist, um das Dokument innerhalb der Hausinstallation (3) wiederzugeben.

10. System nach Anspruch 9, **dadurch gekennzeichnet, dass** das tragbare Endgerät (1) eine Zentraleinheit, ein Mittel zum Speichern mindestens eines audiovisuellen Dokuments, ein Mittel zur Übermittlung über eine Verbindung mit einer anderen Vorrichtung oder mit einem Netz, ein Mittel zur Übermittlung per Funk zum Empfangen eines Downloadsignals eines Dokuments, ein Mittel zum Eingeben eines Befehls zum Überprüfen des Herunterladens des Dokuments mit Hilfe des Funkübermittlungsmittels umfasst, wobei das Speichermittel das empfangene Dokument speichert, wobei die Wiedergabe mindestens eines gespeicherten Dokuments mit Hilfe des Mittels zur Übermittlung über eine Verbindung ausgeführt wird.

11. System nach Anspruch 10, **dadurch gekennzeichnet, dass** das tragbare Endgerät (1) ein Mittel zum Vornehmen einer Zahlung umfasst, die einer der Kennung des Dokuments zugeordneten Summe entspricht.

12. System nach einem der Ansprüche 10 oder 11, **dadurch gekennzeichnet, dass** das tragbare Endgerät (1) ein Mittel zum Zuteilen der Wiedergaben mindestens eines in dem Speichermittel aufgezeichneten Dokuments und ein Mittel zum Senden der dem Zuteilungsmittel zugeordneten Anzahl umfasst.

13. System nach einem der Ansprüche 10 bis 12, **dadurch gekennzeichnet, dass** das tragbare Endgerät (1) ein Mittel zum Entschlüsseln umfasst, dem ein für das Endgerät spezifischer Entschlüsselungsschlüssel zugeordnet ist, wobei das Entschlüsselungsmittel bei der Wiedergabe des in dem Speichermittel aufgezeichneten Dokuments aktiviert wird.

14. System nach einem der Ansprüche 10 bis 13, **dadurch gekennzeichnet, dass** das tragbare Endgerät (1) ein Mittel zum Anzeigen der Liste von Kennungen umfasst.

15. System nach einem der Ansprüche 10 bis 14, **dadurch gekennzeichnet, dass** das tragbare Endgerät (1) einen Chipkartenleser umfasst, der das Überprüfen einer Zahlung ermöglicht.

16. System nach einem der Ansprüche 10 bis 15, **dadurch gekennzeichnet, dass** das tragbare Endgerät (1) einen Chipkartenleser umfasst, der das Herunterladen des Dokuments ermöglicht.

17. System nach einem der Ansprüche 10 bis 16, **dadurch gekennzeichnet, dass** die stationäre Vorrichtung (2) zum Herunterladen audiovisueller Dokumente eine Zentraleinheit (2.1), ein Mittel zum Speichern (2.2) mindestens eines audiovisuellen Dokuments, ein Mittel zum Anzeigen einer Liste von Dokumenten, ein Mittel zum Auswählen eines Dokuments in der Liste, ein Mittel zur Übermittlung per Funk, das ein Signal zum Herunterladen des ausgewählten Dokuments an eine Vorrichtung (1) sendet, die sich innerhalb der Reichweite des Mittels zur Übermittlung befindet, und das als Antwort ein Überprüfungssignal zum Herunterladen des in dem Downloadsignal spezifizierten Dokuments empfängt, umfasst.

18. System nach einem der Ansprüche 10 bis 17, **dadurch gekennzeichnet, dass** die stationäre Vorrichtung (2) zum Herunterladen audiovisueller Dokumente ein Mittel zum Entschlüsseln des Dokuments mit Hilfe eines der Kennung des Endgeräts zugeordneten Verschlüsselungsschlüssels, um das Dokument in verschlüsselter Form zu senden, umfasst.

19. System nach einem der Ansprüche 10 bis 18, **dadurch gekennzeichnet, dass** die Übertragung des Dokuments unter der Bedingung einer Zahlung erfolgt.

20. System nach einem der Ansprüche 10 bis 19, **dadurch gekennzeichnet, dass** die stationäre Vorrichtung (2) zum Herunterladen audiovisueller Dokumente ein Mittel zum Zuteilen der mindestens einem Dokument zugeordneten Downloads und ein Mittel zur Löschung dieses Dokuments aus dem Speicher umfasst, wobei das Mittel aktiviert wird, wenn der diesem Dokument zugeordnete Wert des Mittels zum Herunterladen einen vorgegebenen Wert erreicht hat.

21. System nach einem der Ansprüche 10 bis 20, **dadurch gekennzeichnet, dass** die stationäre Vorrichtung (2) zum Herunterladen audiovisueller Dokumente ein Mittel zum Zuteilen der mindestens einem Dokument zugeordneten Downloads und ein Mittel zur Löschung dieses Dokuments aus dem Speicher umfasst, wobei das Mittel aktiviert wird, wenn die Anzahl der Downloads pro Zeiteinheit kleiner als ein vorgegebener Wert ist.

22. Tragbares Endgerät (1) zur Verwendung in einem System nach einem der Ansprüche 9-21.

23. Stationäre Vorrichtung (2) zur Verwendung in einem System nach einem der Ansprüche 9-21.

## Revendications

1. Un procédé de distribution de contenu audiovisuel transmis à partir d'un bureau de diffusion, **caractérisé en ce qu'**il comprend les étapes suivantes :
- sélection d'un contenu en entrant une commande dans un dispositif fixe (2) à un point de vente, et téléchargement par radio du contenu sélectionné à partir du dispositif fixe (2) vers la mémoire d'un moyen de mémorisation portable (1).
- connexion du moyen de mémorisation portable (1) à une installation domestique (3) afin de reproduire le contenu dans ladite installation domestique (3).

2. Le processus pour la distribution de contenu tel que revendiqué dans la revendication 1, **caractérisé en ce que** le téléchargement du contenu dans le moyen de mémorisation portable comprend les étapes suivantes :
- transmission par le dispositif fixe d'un signal proposant le téléchargement d'un contenu au moins ;
- validation du téléchargement en introduisant une commande sur le moyen de mémorisation portable ;
- transmission par le dispositif fixe et réception au niveau du moyen de mémorisation portable d'un contenu au moins ;
- stockage du contenu sélectionné au niveau du moyen de mémorisation portable.

3. Le processus permettant la distribution de contenu tel que revendiqué dans la revendication 2 : **caractérisé en ce que** le transfert est conditionné par le propre fonctionnement d'une étape e de paiement d'un prix associé au contenu sélectionné et stocké dans le dispositif fixe.

4. Le processus permettant la distribution de contenu tel que revendiqué dans la revendication 2, **caractérisé en ce qu'**il comprend l'étape e de mesure du nombre de reproductions au niveau de l'installation domestique, et une étape de paiement d'une somme calculée en tant que fonction de ce nombre.

5. Le processus de distribution de contenu tel que revendiqué dans l'une quelconque des revendications 1 à 4, **caractérisé en ce qu'**il comprend une étape de mesure du contenu téléchargé par le dispositif fixe (2).

6. Le processus pour la distribution de contenu tel que revendiqué dans la revendication 5, **caractérisé en ce qu'**il comprend une étape de suppression d'un contenu dans le dispositif fixe (2), ladite étape de suppression étant déclenchée lorsque le compteur de téléchargement associé à ce contenu atteint une certaine valeur.

7. Le processus pour la distribution de contenu tel que revendiqué dans la revendication 5, **caractérisé en ce qu'**il comprend une étape de suppression d'un contenu dans le dispositif fixe (2), ladite étape de suppression étant déclenchée lorsque le nombre de téléchargements par temps d'unité est inférieur à une valeur déterminée.

8. Le processus permettant la distribution de contenu tel que revendiqué dans l'une quelconque des revendications 1 à 7 **caractérisé en ce que** le contenu est stocké crypté dans le dispositif fixe (2) et **en ce qu'**il comprend, avant le téléchargement d'un contenu dans un moyen de mémorisation (t), une étape de décryptage de ce contenu et une étape de cryptage du contenu à l'aide d'une clé associée au moyen de mémorisation prévu pour recevoir le contenu.

9. Un système permettant la fourniture de contenu audiovisuel, comprenant
un dispositif fixe (2) à un point de vente fournissant du contenu audiovisuel transmis à partir d'un bureau de diffusion, un contenu étant sélectionné en entrant une commande dans le dispositif fixe (2),
un moyen de mémorisation portable (1) comprenant une mémoire pour le téléchargement par radio du contenu sélectionné à partir du dispositif fixe (2) à la mémoire du moyen de mémorisation portable (1) ;
et une installation domestique (3) pour être connectée au moyen de mémorisation portable (1) afin de reproduire le contenu dans ladite installation domestique (3).

10. Le système selon la revendication 9, **caractérisé en ce que** le moyen de mémorisation portable (1) comprenant une unité centrale, un moyen de stockage d'un contenu audiovisuel au moins, un moyen de communication via la connexion avec un autre appareil ou un réseau, un moyen de communication par radio pour la réception d'un signal de téléchargement d'un contenu, un moyen d'entrer une commande de validation de téléchargement dudit contenu grâce au moyen de communication radio, le moyen de stockage stockant le contenu reçu, la reproduction d'au moins un contenu stocké étant effectuée grâce au moyen de communication via une connexion.

11. Le système selon la revendication 10, **caractérisé en ce que** le moyen de mémorisation portable (1) comprend un moyen d'effectuer un paiement correspondant à une somme associée à l'identificateur du contenu.

12. Le système selon l'une des revendications 10 ou 11, **caractérisé en ce que** le moyen de mémorisation portable (1) comprend un moyen de mesure des reproductions d'au moins un contenu enregistré dans le moyen de stockage, et un moyen de transmission du nombre associé au moyen de mesure.

13. Le système selon l'une des revendications 10 à 12, **caractérisé en ce que** le moyen de mémorisation portable (1) comprend un moyen de décryptage associé à une clé de décryptage spécifique au terminal, ledit moyen de décryptage étant activé lors de la reproduction du contenu enregistré dans le moyen de stockage.

14. Le système selon l'une des revendications 10 à 13, **caractérisé en ce que** le moyen de mémorisation portable (1) comprend un moyen d'affichage de la liste d'identificateurs.

15. Le système selon l'une des revendications 10 à 14, **caractérisé en ce que** le moyen de mémorisation portable (1) comprend un lecteur de carte à puce permettant à un paiement d'être validé.

16. Le système selon l'une des revendications 10 à 15, **caractérisé en ce que** le terminal portable (1) comprend un lecteur de carte à puce permettant le téléchargement du contenu.

17. Le système selon l'une des revendications 10 à 16, **caractérisé en ce que** le dispositif fixe (2) pour le téléchargement du contenu audiovisuel comprend une unité centrale (2.1), un moyen de stockage (2.2) d'au moins un contenu audiovisuel, un moyen d'affichage d'une liste de contenus, un moyen de sélection d'un contenu dans la liste, un moyen de communication par radio envoyant un signal pour le téléchargement du contenu sélectionné sur un appareil (1) situé en dessous de la gamme du moyen de communication et recevant en réponse un signal de validation pour le téléchargement du contenu spécifié dans le signal de téléchargement.

18. Le système selon l'une des revendications 10 à 17, **caractérisé en ce que** le dispositif fixe (2) pour le téléchargement des contenus audiovisuels comprenant un moyen de cryptage du contenu grâce à une clé de cryptage associée à l'identificateur du terminal pour la transmission du contenu sous forme cryptée.

19. Le système, selon l'une des revendications 10 à 18, **caractérisé en ce que** le transfert du contenu est conditionné par un paiement.

20. Le système selon l'une des revendications 10 à 19, **caractérisé en ce que** le dispositif fixe (2) pour le téléchargement de contenus audiovisuels comprenant un moyen de mesure du téléchargement associé à au moins un contenu, et un moyen de suppression de ce contenu depuis la mémoire, ledit moyen étant activé lorsque la valeur du moyen de mesure de téléchargement associée à ce contenu a atteint une valeur prédéfinie.

21. Le système selon l'une des revendications 10 à 20, **caractérisé en ce que** le dispositif fixe (2) pour le téléchargement de contenus audiovisuels comprenant un moyen de mesure des téléchargements associé à au moins un contenu, et un moyen de suppression de ce contenu de la mémoire, ledit moyen étant activé lorsque le nombre de téléchargement par temps d'unité est inférieur à une valeur définie.

22. Un terminal portable (1) permettant une utilisation dans un système selon l'une des revendications 9 à 21.

23. Un dispositif fixe (2) permettant l'utilisation dans un système selon l'une des revendications 9 à 21.
